# EUROPEAN PATENT APPLICATION

(11) **EP 4 510 340 A1**
(43) Date of publication of application: **19.02.2025**
(21) Application number: 22937188.5
(22) Date of filing: 19.10.2022
(51) Int. Cl.: H01M 50/289, H01M 50/204, H01M 50/244

(54) **BATTERY CELL MOUNTING BASE AND BATTERY MODULE**

(30) Priority: 12.04.2022 CN 202220840901 U
(71) Applicant: Eve Power Co., Ltd., Jingmen, Hubei 448000 (CN)
(72) Inventor: QIU, Wencong, Jingmen, Hubei 448000 (CN); LI, Fan, Jingmen, Hubei 448000 (CN); CHEN, Zhiwei, Jingmen, Hubei 448000 (CN); CHEN, Zhaohai, Jingmen, Hubei 448000 (CN); FENG, Yanqiang, Jingmen, Hubei 448000 (CN)
(74) Representative: Prinz & Partner mbB
(86) International application number: PCT/CN2022/126172
(87) International publication number: WO 2023/197555

(57) **Abstract**

Provided are a battery cell mounting base and a battery module. The battery cell mounting base includes a lower cover, the lower cover has a limit groove for accommodating a battery cell, the battery cell is secured in the limit groove, and a connecting portion is provided on a side of the lower cover away from the battery cell, and the lower cover is capable of being secured to a battery box through the connecting portion.

## Description

This application claims priority to Chinese Patent Application No. 202220840901.1 filed with the China National Intellectual Property Administration (CNIPA) on Apr. 12, 2022, the disclosure of which is incorporated herein by reference in its entirety.

### TECHNICAL FIELD

The present application relates to the technical field of power batteries, for example, a battery cell mounting base and a battery module.

### BACKGROUND

At present, most cases of cylindrical grouping use integral plastic parts for grouping and have the disadvantages described below. First, a relatively large plastic part is required for a large number of battery cells, and the plastic part is difficult to manufacture, resulting in difficulties in grouping. Second, battery boxes of different specifications and models have different sizes and shapes, so this type of integral plastic part can only be customized. Every time the customer or solution is changed, the integral plastic part needs to be redesigned, leading to relatively high costs. Third, in the related art, battery cells are bonded by structural adhesive, but the positioning accuracy of these battery cells is poor.

### SUMMARY

The present application provides a battery cell mounting base and a battery module. The battery cell mounting base is configured to connect a single battery cell and a battery box, multiple battery cells can be spliced in the battery box through the battery cell mounting base, and battery cell mounting bases are disposed according to the number of battery cells in the battery module. In this manner, battery cells and battery cell mounting bases can be freely matched for connection in series or parallel, and thus the battery cell mounting base is more compatible. The battery cell mounting base is small in structure and easy to manufacture and mount, and thus costs are saved. The battery cell mounting base is configured to position the battery cell, improving the positioning accuracy.

In a first aspect, an embodiment of the present application provides a battery cell mounting base. The battery cell mounting base includes a lower cover, the lower cover has a limit groove for accommodating a battery cell, the battery cell is secured in the limit groove, a connecting portion is provided on a side of the lower cover away from the battery cell, and the lower cover is secured to a battery box through the connecting portion.

In an embodiment, a first snap is provided on one of the lower cover or the battery box, and a first clamping groove is provided on the other one. The first snap is engaged with the first clamping groove, and the connecting portion is the first snap or the first clamping groove provided on the lower cover.

In an embodiment, the connecting portion is disposed on a bottom surface of the lower cover.

In an embodiment, a first adhesive storage groove is opened on an inner wall of the limit groove.

In an embodiment, the first adhesive storage groove is disposed on a bottom wall of the limit groove.

In an embodiment, a second adhesive storage groove is disposed on the side of the lower cover away from the battery cell, and when filled with structural adhesive, the second adhesive storage is capable of bonding the lower cover and the battery box.

In an embodiment, the second adhesive storage groove is provided on a bottom surface of the lower cover.

In an embodiment, the lower cover includes a bottom plate and multiple side plates annularly connected to an outer periphery of the bottom plate, the multiple side plates are disposed at intervals, and the bottom plate and the multiple side plates enclosure to form the limit groove.

In an embodiment, a limit protrusion is provided on an outer periphery surface of each side plate.

In an embodiment, a first electrode and a second electrode of the battery cell are located on the same side of the battery cell, the battery cell mounting base further includes an upper cover disposed opposite to the lower cover, the upper cover covers the side of the batter cell where the first electrode and the second electrode are disposed, and the first electrode and the second electrode are exposed from the upper cover.

In an embodiment, the second electrode protrudes from the first electrode, the upper cover includes a first annular cylinder and a second annular cylinder connected to a cylinder mouth at an end of the first annular cylinder, the first annular cylinder is sleeved on an outer periphery of the battery cell, the second annular cylinder is sleeved on the second electrode, the first electrode is exposed from the cylinder mouth of the first annular cylinder, and the second electrode is exposed from a cylinder mouth of the second annular cylinder.

In an embodiment, a baffle plate is disposed at an end portion of the first annular cylinder, the second annular cylinder is connected to the baffle plate through a connecting plate, and the connecting plate and the baffle plate are capable of abutting against a part of the first electrode.

In an embodiment, the battery cell is cylindrical, and an inner wall of the first annular cylinder is circular.

The second electrode is cylindrical, and an inner wall of the second annular cylinder is circular.

In an embodiment, a second snap and a second clamping groove are provided in a circumferential direction of the first annular cylinder.

In an embodiment, the second snap and the second clamping groove are disposed opposite to each other.

In a second aspect, an embodiment of the present application provides a battery module. The battery module includes a battery box, a busbar, battery cells and the preceding battery cell mounting base, multiple battery cells and multiple battery cell mounting bases are provided, and the busbar is connected to a first electrode of a battery cell and a second electrode of another battery cell.

In an embodiment, a honeycomb panel is disposed inside the battery box, and the lower cover is mounted in an accommodation groove of the honeycomb panel.

The present application has the beneficial effects below.

According to the battery cell mounting base and the battery module provided in the present application, the limit groove and the connecting portion are provided on the lower cover for connecting the single battery cells and the battery box. Multiple battery cells can be spliced in the battery box through the lower cover. The number of battery cells and the number of lower covers can be adaptively set according to the capacity of the battery module and the size and shape of the battery box. In this manner, the battery cells and the lower covers can be freely matched for connection in series or parallel, and thus the grouping manner is more flexible and compatible. The lower cover has a small volume in structure and is easy to manufacture and mount, and thus the costs are saved. The limit groove of the lower cover is configured to position the battery cell, improving the positioning accuracy.

### BRIEF DESCRIPTION OF DRAWINGS

FIG. 1 is an assembly view of a battery cell and a battery cell mounting base according to some embodiments of the present application;
FIG. 2 is an assembly view of multiple groups of battery cells and battery cell mounting bases according to some embodiments of the present application;
FIG. 3 is an enlarged view of part A in FIG. 2;
FIG. 4 is a structural view of a lower cover from a perspective according to some embodiments of the present application;
FIG. 5 is a structural view of a lower cover from another perspective according to some embodiments of the present application;
FIG. 6 is a structural view of a battery module according to some embodiments of the present application; and
FIG. 7 shows a structural view of a honeycomb panel and an enlarged view of part B of the honeycomb panel according to some embodiments of the present application.

### Reference list

- 100: battery cell
- 101: first electrode
- 102: second electrode
- 1: upper cover
- 11: first annular cylinder
- 12: second annular cylinder
- 13: connecting plate
- 14: baffle plate
- 15: second snap
- 16: second clamping groove
- 2: lower cover
- 21: limit groove
- 22: first snap
- 221: first clamping groove
- 23: first adhesive storage groove
- 24: second adhesive storage groove
- 25: limit protrusion
- 26: bottom plate
- 27: side plate
- 3: battery box
- 4: busbar
- 5: honeycomb panel

### DETAILED DESCRIPTION

Embodiments of the present application are described hereinafter in conjunction with drawings. Based on the embodiments of the present application, all other embodiments obtained by those skilled in the art without creative work are within the scope of the present application.

In the description of the present application, terms "joined", "connected", and "fixed" are to be understood in a broad sense unless otherwise expressly specified and limited. For example, the term "connected" may refer to "fixedly connected", "detachably connected" or "integrated", may refer to "mechanically connected" or "electrically connected", or may refer to "connected directly", "connected indirectly through an intermediary", or "connected inside two components" or an interaction relation between two components. For those of ordinary skill in the art, specific meanings of the preceding terms in the present application may be understood based on specific situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above" or "over" the second feature, the first feature is right on, above or over the second feature, or the first feature is obliquely on, above or over the second feature, or the first feature is simply at a higher level than the second feature. When the first feature is described as "under", "below" or "underneath" the second feature, the first feature is right under, below or underneath the second feature, or the first feature is obliquely under, below or underneath the second feature, or the first feature is simply at a lower level than the second feature.

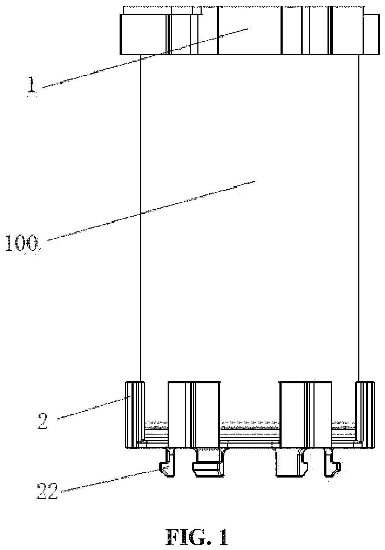

An embodiment provides a battery cell mounting base. As shown in FIG. 1 to FIG. 5, the battery cell mounting base includes a lower cover 2, the lower cover 2 has a limit groove 21 for accommodating a battery cell 100, the battery cell 100 is secured in the limit groove 21, a connecting portion is provided on a side of the lower cover 2 away from the battery cell 100, and the lower cover 2 can be secured to a battery box 3 through the connecting portion.

The limit groove 21 and the connecting portion are provided on the lower cover 2 for connecting single battery cells 100 and the battery box 3. Multiple battery cells 100 can be spliced in the battery box 3 through the lower cover 2. The number of battery cells 100 and the number of lower covers 2 can be set adaptively according to the capacity of a battery module and the size and shape of the battery box 3. In this manner, the battery cells 100 and the lower covers 2 can be freely matched for connection in series or parallel, and thus the grouping manner is more flexible and compatible. The lower cover 2 has a small volume in structure and is easy to manufacture and mount, and thus costs are saved. The limit groove 21 of the lower cover 2 is configured to position the battery cell, improving the positioning accuracy.

In an embodiment, a first electrode 101 and a second electrode 102 of the battery cell 100 are located on the same side, the battery cell mounting base further includes an upper cover 1 disposed opposite to the lower cover 2, the upper cover 1 covers the side of the batter cell 100 where the first electrode 101 and the second electrode 102 are disposed, and the first electrode 101 and the second electrode 102 are exposed from the upper cover 1.

During assembly, two ends of the battery cell 100 are connected to the upper cover 1 and the lower cover 2 respectively. For ease of description, the battery cell 100 is mounted between the upper cover 1 and the lower cover 2 to form a battery cell group, which is simple in structure and easy to assemble. When the battery module includes multiple battery cells 100, multiple battery cell mounting bases with the same number as the battery cells 100 are disposed to form multiple battery cell groups, and then the multiple battery cell groups are secured to the battery box 3 through the lower cover 2, so the connection reliability is improved. The battery cell groups can be spliced, and battery cell mounting bases are disposed according to the number of battery cells 100 in the battery module. In this manner, battery cells and battery cell mounting bases can be freely matched for connection in series or parallel, and thus the battery cell mounting bases are more compatible and are easy to mount. It is not necessary to customize the battery cell mounting base according to the model of the battery module, saving costs. For example, the upper cover 1 and the lower cover 2 may be manufactured according to the model of the battery cell 100, and the same type of battery cell 100 can use the same upper cover 1 and the same lower cover 2. Thus, mass production can be achieved, further reducing the costs and shortening the manufacturing period. The upper cover 1 and the lower cover 2 are configured to not only protect but also limit the battery cell 100, improving the reliability of the battery cells mounted in the battery box 3. The first electrode 101 and the second electrode 102 are exposed to facilitate the connection of different battery cells 100 in series or parallel through a busbar 4.

For example, the upper cover 1 is a plastic cover, and the lower cover 2 is a plastic base. The upper cover 1 and the lower cover 2 have the insulation function so that short circuits between different battery cells 100 can be prevented, and safety and reliability are improved.

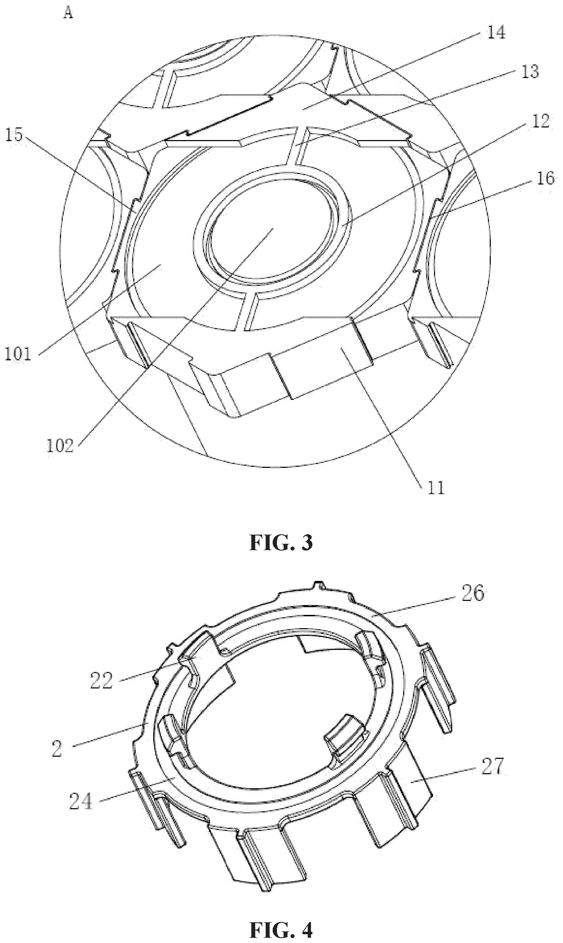

In the embodiment, as shown in FIG. 3, the first electrode 101 is a negative electrode, and the second electrode 102 is a positive electrode. In other embodiments, the first electrode 101 may be a positive electrode, and the second electrode 102 may be a negative electrode.

In an embodiment, as shown in FIG. 3, the second electrode 102 protrudes from the first electrode 101. The upper cover 1 includes a first annular cylinder 11 and a second annular cylinder 12 connected to a cylinder mouth at an end of the first annular cylinder 11, the first annular cylinder 11 is sleeved on an outer periphery of the battery cell 100, the first annular cylinder 11 is configured to limit the battery cell 100 in the circumferential direction, and the second annular cylinder 12 is sleeved on the second electrode 102 to avoid short circuits between the first electrode 101 and the second electrode 102 of the same battery cell 100. For example, the first electrode 101 is exposed from the cylinder mouth of the first annular cylinder 11, and the second electrode 102 is exposed from a cylinder mouth of the second annular cylinder 12.

In an embodiment, the battery cell 100 is cylindrical, an inner wall of the first annular cylinder 11 is circular, and the shape of the inner wall of the first annular cylinder 11 is adapted to the shape of the cylindrical battery cell, which improves the connection reliability and prevents shaking. When the battery cell 100 is in other shapes, the shape of the inner wall of the first annular cylinder 11 is set adaptively according to the shape of the battery cell 100. Similarly, in an embodiment, the second electrode 102 is cylindrical, and an inner wall of the second annular cylinder 12 is circular.

In an embodiment, as shown in FIG. 3, a baffle plate 14 is disposed at an end portion of the first annular cylinder 11 to limit the battery cell 100 relative to the direction of the lower cover 2. In the embodiment, the battery cell 100 is cylindrical, the baffle plate 14 is configured to axially limit the second annular cylinder 12, the second annular cylinder 12 is connected to the baffle plate 14 through a connecting plate 13, and the connecting plate 13 and the baffle plate 14 can abut against a part of the first electrode 101 so that the other part of the first electrode 101 is exposed.

In an embodiment, as shown in FIG. 3, a second snap 15 and a second clamping groove 16 are provided in a circumferential direction of the first annular cylinder 11. The second snap 15 of the first upper cover 1 can be engaged with the second clamping groove 16 of an adjacent upper cover 1, and the second clamping groove 16 of the first upper cover 1 can be engaged with the second snap 15 of the adjacent upper cover 1. Adjacent battery cells 100 are detachably connected through respective upper covers 1, which improves the reliability of the connection between different battery cells 100 and prevents short circuits. For example, the second snap 15 protrudes from a periphery surface of the first annular cylinder 11 in a radial direction, and the second clamping groove 16 is recessed in the periphery surface of the first annular cylinder 11 in the radial direction.

In an embodiment, the second snap 15 and the second clamping groove 16 are disposed opposite to each other. When multiple battery cells 100 are disposed in rows, the second snap 15 and the second clamping groove 16 disposed opposite to each other are connected to the upper covers 1 of adjacent battery cells 100 on two sides in the same row respectively, so the reliability of connection between the battery cells 100 in the same row is improved.

In an embodiment, a pair of second snap 15 and second clamping groove 16 may be provided. In an embodiment, two pairs of second snaps 15 and second clamping grooves 16 may be provided, and the second snaps 15 and the second clamping grooves 16 are disposed opposite each other, so two adjacent battery cells 100 in the same row can be connected through upper covers 1, while two adjacent battery cells 100 in the same column can be connected through upper covers 1; thus, the reliability of connection between multiple rows and columns of battery cells 100 in the battery box 3 can be improved. In an embodiment, three or more pairs of second snaps 15 and second clamping grooves 16 may be provided. In the embodiment, as shown in FIG. 3, the shape of the cross-section of the outer periphery of the upper cover 1 is hexagonal, and three pairs of second snaps 15 and second clamping grooves 16 are provided on the outer periphery for engagement connection with adjacent upper covers 1. Six side surfaces of the upper cover 1 are all connected to adjacent upper covers 1, so mounting density is improved.

In an embodiment, a first snap 22 is provided on one of the lower cover 2 or the battery box 3, a first clamping groove 221 is provided on the other one, and the first snap 22 is engaged with the first clamping groove 221, so the reliability of connection between the lower cover 2 and the battery box 3 is improved, and the reliability of connection of the battery cells 100 in the battery box 3 is improved. Moreover, the detachable connection between the lower cover 2 and the battery box 3 facilitates the disassembly and assembly. In the embodiment, as shown in FIG. 1 and FIG. 4, the first snap 22 is provided on a bottom surface of the lower cover 2, so it facilitates inserting the lower cover 2 in the battery box 3 for mounting.

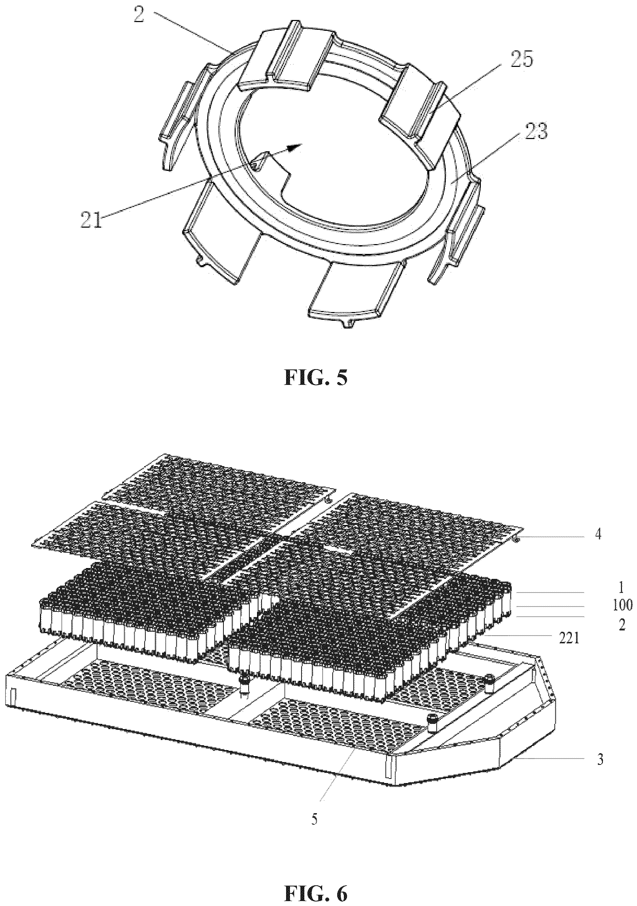

In an embodiment, a first adhesive storage groove 23 is opened on an inner wall of the limit groove 21. After the first adhesive storage groove 23 is filled with structural adhesive, the battery cell 100 is bonded in the limit groove 21, which improves the reliability of mounting between the battery cell 100 and the lower cover 2. In an embodiment, as shown in FIG. 5, the first adhesive storage groove 23 is opened on a bottom wall of the limit groove 21. Similarly, in an embodiment, a second adhesive storage groove 24 is provided on the side of the lower cover 2 away from the battery cell 100, and when filled with structural adhesive, the second adhesive storage groove 24 can bond the lower cover 2 and the battery box 3, so mounting between the lower cover 2 and the battery box 3 is more reliable. In the embodiment, as shown in FIG. 4, the second adhesive storage groove 24 is disposed on the bottom surface of the lower cover 2.

In an embodiment, the lower cover 2 includes a bottom plate 26 and multiple side plates 27 annularly connected to an outer periphery of the bottom plate 26 and disposed at intervals, and the bottom plate 26 and the multiple side plates 27 form the limit groove 21, so the weight of the lower cover 2 is reduced. In an embodiment, a limit protrusion 25 is provided on an outer periphery surface of each side plate 27 for circumferential limiting.

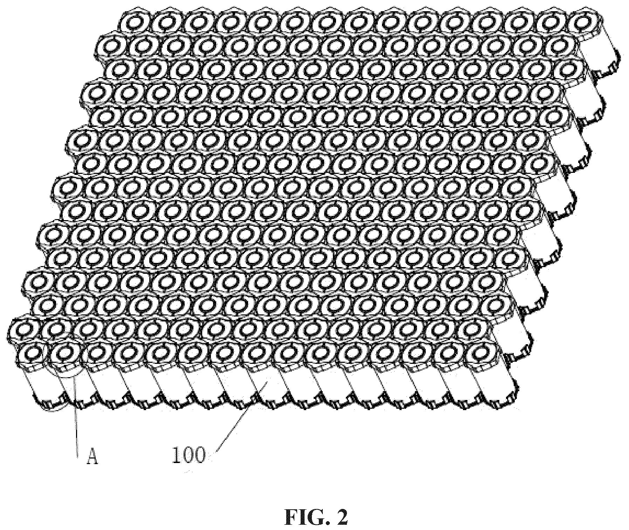

The embodiment provides a battery module. As shown in FIG. 2, the battery module includes a battery box 3, a busbar 4, battery cells 100 and the preceding battery cell mounting base. Multiple battery cells 100 and multiple battery cell mounting bases are disposed, and the busbar 4 is connected to the first electrode 101 of one battery cell 100 and the second electrode 102 of another batter cell 100 to achieve parallel connection of two battery cells 100. Battery cell groups can be spliced, and battery cell mounting bases are disposed according to the number of battery cells 100 in the battery module. In this manner, battery cells and battery cell mounting bases can be freely matched for connection in series or parallel, and thus the battery cell mounting bases are more compatible and easy to mount. It is not necessary to customize the battery cell mounting base according to the model of the battery module, saving the costs.

In an embodiment, a honeycomb panel 5 is disposed inside the battery box 3, and the lower cover 2 is mounted in an accommodation groove of the honeycomb panel 5 to prevent the lower cover 2 from moving.

In the embodiment, the second adhesive storage groove 24 is opened on the lower cover 2. When structural adhesive is applied to the second adhesive storage groove 24, the lower cover 2 can be bonded in the accommodation groove, so the lower cover 2 is secured more firmly to the honeycomb panel 5.

In the embodiment, limit protrusions 25 are provided on the outer periphery of the lower cover 2, and recesses matching the limit protrusions are provided on a groove side wall of the accommodation groove, so the circumferential rotation of the lower cover 2 can be limited, and thus the reliability of mounting can be improved. In this manner, no recess is provided on the lower cover 2 which is thin in structure, so the impact on the structural strength is avoided.

In the embodiment, a first clamping groove is provided on a groove bottom of the accommodation groove, and the first snap 22 on the lower cover 2 is engaged with the first clamping groove.

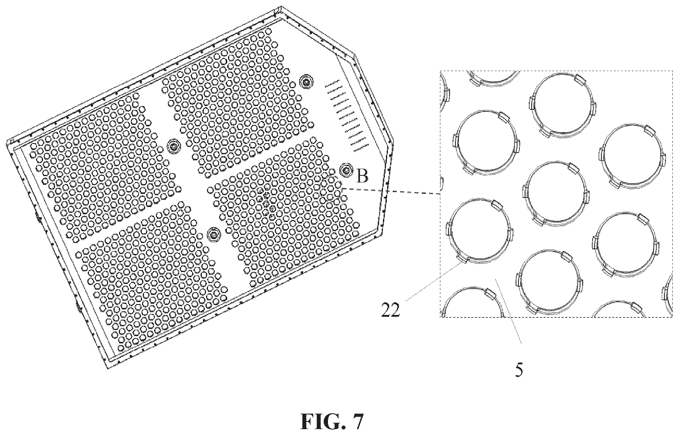

In an embodiment, reference may be made to the structure of the battery module shown in FIG. 6 and the structure of the honeycomb panel shown in FIG. 7.

## Claims

1. A battery cell mounting base, comprising a lower cover (2), wherein the lower cover (2) has a limit groove (21) for accommodating a battery cell (100), the battery cell (100) is secured in the limit groove (21), a connecting portion is provided on a side of the lower cover (2) away from the battery cell (100), and the lower cover (2) is secured to a battery box (3) through the connecting portion.

2. The battery cell mounting base according to claim 1, wherein a first snap (22) is provided on one of the lower cover (2) or the battery box (3), a first clamping groove (221) is provided on the other one of the lower cover (2) or the battery box (3), the first snap (22) is engaged with the first clamping groove (221), and the connecting portion is the first snap (22) or the first clamping groove (221) which is provided on the lower cover (2).

3. The battery cell mounting base according to claim 1, wherein the connecting portion is disposed on a bottom surface of the lower cover (2).

4. The battery cell mounting base according to claim 1, wherein a first adhesive storage groove (23) is opened on an inner wall of the limit groove (21).

5. The battery cell mounting base according to claim 4, wherein the first adhesive storage groove (23) is opened on a bottom wall of the limit groove (21).

6. The battery cell mounting base according to claim 4, wherein a second adhesive storage groove (24) is provided on the side of the lower cover (2) away from the battery cell (100), and the second adhesive storage groove (24) filled with structural adhesive is capable of bonding the lower cover (2) and the battery box (3).

7. The battery cell mounting base according to claim 6, wherein the second adhesive storage groove (24) is disposed on a bottom surface of the lower cover (2).

8. The battery cell mounting base according to claim 1, wherein the lower cover (2) comprises a bottom plate (26) and a plurality of side plates (27) annularly arranged and connected to an outer periphery of the bottom plate (26), the plurality of side plates (27) are disposed at intervals, and the bottom plate (26) and the plurality of side plates (27) are encircled to form the limit groove (21).

9. The battery cell mounting base according to claim 8, wherein a limit protrusion (25) is provided on an outer periphery surface of each of the plurality of side plates (27).

10. The battery cell mounting base according to any one of claims 1 to 9, wherein a first electrode (101) and a second electrode (102) of the battery cell (100) are located on a same side of the battery cell (100), the battery cell mounting base further comprises an upper cover (1) disposed opposite to the lower cover (2), the upper cover (1) covers the side of the batter cell (100) where the first electrode (101) and the second electrode (102) are disposed, and the first electrode (101) and the second electrode (102) are exposed from the upper cover (1).

11. The battery cell mounting base according to claim 10, wherein the second electrode (102) protrudes from the first electrode (101), the upper cover (1) comprises a first annular cylinder (11) and a second annular cylinder (12) connected to a cylinder mouth at an end of the first annular cylinder (11), the first annular cylinder (11) is sleeved on an outer periphery of the battery cell (100), the second annular cylinder (12) is sleeved on the second electrode (102), the first electrode (101) is exposed from the cylinder mouth of the first annular cylinder (11), and the second electrode (102) is exposed from a cylinder mouth of the second annular cylinder (12).

12. The battery cell mounting base according to claim 11, wherein a baffle plate (14) is disposed at an end portion of the first annular cylinder (11), the second annular cylinder (12) is connected to the baffle plate (14) through a connecting plate (13), and the connecting plate (13) and the baffle plate (14) abut against a part of the first electrode (101).

13. The battery cell mounting base according to claim 11, wherein the battery cell (100) is a cylindrical battery cell, and an inner wall of the first annular cylinder (11) is circular.

14. The battery cell mounting base according to claim 11, wherein the second electrode (102) is cylindrical, and an inner wall of the second annular cylinder (12) is circular.

15. The battery cell mounting base according to claim 13, wherein the second electrode (102) is cylindrical, and an inner wall of the second annular cylinder (12) is circular.

16. The battery cell mounting base according to claim 11, wherein a second snap and a second clamping groove (16) are provided in a circumferential direction of the first annular cylinder (11).

17. The battery cell mounting base according to claim 16, wherein the second snap (15) and the second clamping groove (16) are disposed opposite to each other.

18. A battery module, comprising a battery box (3), a busbar (4), a battery cell (100) and the battery cell mounting base according to any one of claims 1 to 17, wherein a plurality of battery cells (100) and a plurality of battery cell mounting bases are provided, and the busbar (4) is connected to a first electrode (101) of a battery cell (100) among the plurality of battery cells (100) and a second electrode (102) of another battery cell (100) among the plurality of battery cells (100).

19. The battery module according to claim 18, wherein a honeycomb panel (5) is disposed inside the battery box (3), and the lower cover (2) is mounted in an accommodating groove of the honeycomb panel (5).
